Europäisches Patentamt

European Patent Office

Office européen des brevets

(19)

(11) Veröffentlichungsnummer : **0 062 842**
**B1**

(12) **EUROPÄISCHE PATENTSCHRIFT**

(45) Veröffentlichungstag der Patentschrift :
20.08.86

(21) Anmeldenummer : 82102750.5

(22) Anmeldetag : 31.03.82

(51) Int. Cl.⁴ : **G 01 D 11/18, G 01 D 9/04**

(54) **Messgetriebe mit definierter Nullposition.**

(30) Priorität : 02.04.81 DE 3113359

(43) Veröffentlichungstag der Anmeldung :
20.10.82 Patentblatt 82/42

(45) Bekanntmachung des Hinweises auf die Patenterteilung : 20.08.86 Patentblatt 86/34

(84) Benannte Vertragsstaaten :
CH DE FR GB IT LI SE

(56) Entgegenhaltungen :
DE-A- 2 100 831
GB-A- 947 574

(73) Patentinhaber : Siemens Aktiengesellschaft Berlin
und München
Wittelsbacherplatz 2
D-8000 München 2 (DE)

(72) Erfinder : Golker, Walter
Pfundmayerstrasse 25
D-8000 München 70 (DE)
Erfinder : Tamm, Horst, Ing.grad.
Karl-Marx-Ring 56
D-8000 München 83 (DE)

**Beschreibung**

Die Erfindung bezieht sich auf ein Meßgetriebe mit verzahnter Eingangswelle, welche in einem Getriebegehäuse eine definierte Nullposition besitzt.

Derartige Meßgetriebe dienen beispielsweise dazu, um eine Antriebseinheit, deren Winkelposition überwacht werden soll, mit einem Meßwertgeber, beispielsweise einem Drehmelder, zu koppeln, gegebenenfalls mit einer gewünschten Übersetzung oder Untersetzung. Das Ausgangssignal einer solchen Einheit ist fest mit der Stellung der Eingangswelle gekoppelt, so daß einem festgelegten Nullsignal auch eine definierte Nullposition der Eingangswelle zugeordnet ist. Bei der Montage des Meßgetriebes muß sichergestellt werden, daß diese Nullposition der Eingangswelle auch der Nullposition der Antriebseinheit entspricht.

Bei der Herstellung und Montage des Meßgetriebes wird die erwähnte Nullposition ermittelt und eingestellt. Da aber das Meßgetriebe normalerweise nicht unmittelbar nach seiner Montage auch an die Antriebseinheit gekoppelt wird, besteht bei der Lagerung und beim Transport bis zum endgültigen Einbau die Gefahr, daß die zuvor exakt eingestellte Nullposition der Eingangswelle absichtlich oder unabsichtlich verstellt wird.

Aufgabe der Erfindung ist es deshalb, ein Meßgetriebe der eingangs erwähnten Art so zu gestalten, daß ein unabsichtliches Verstellen der Nullposition ausgeschlossen und ein beabsichtigtes Verstellen zumindest stark erschwert wird, daß die Eingangswelle aber bei der Ankopplung an die zugehörige Antriebseinheit in einfacher Weise, gegebenenfalls auch automatisch entriegelbar ist.

Erfindungsgemäß wird diese Aufgabe dadurch gelöst, daß die Eingangswelle im Anschluß an die auf ihrem Umfang ausgebildete Verzahnung einen Abschnitt verminderten Querschnitts aufweist und daß auf der Eingangswelle ein senkrecht zu ihrer Achse stehendes Verriegelungsblech mit an die Verzahnung der Welle angepaßter Innenverzahnung angeordnet ist, wobei das Verriegelungsblech in einer Axialführung drehgesichert gelagert, mittels Federkraft in den Verzahnungsbereich der Eingangswelle vorgespannt und entgegen der Federkraft in Axialrichtung in den Bereich verminderten Querschnitts der Eingangswelle verschiebbar ist.

Durch das erfindungsgemäß vorgesehene Verriegelungsblech, welches durch Federkraft mit der Verzahnung der Eingangswelle in Eingriff gehalten wird, ist sichergestellt, daß die Welle in der einmal eingestellten Nullposition selbsttätig fixiert wird. Eine Entriegelung kann nur durch bewußte Verschiebung des Verriegelungsbleches entgegen der Federkraft vorgenommen werden, so daß eine unbeabsichtigte Verstellung der Position nicht möglich ist. Auch eine absichtliche Verstellung durch Unbefugte ist nicht ohne weiteres möglich, da durch den Verzahnungseingriff des Verriegelungsbleches über den gesamten Wellenumfang ein einseitiges Andrücken an dem Verriegelungsblech zum Verkanten führt und eine Entriegelung verhindert. Zur Entriegelung muß eine Krafteinwirkung zumindest an zwei gegenüberliegenden Seiten der Eingangswelle auf das Verriegelungsblech erfolgen, was also nur beidhändig unter erheblichem Kraftaufwand — bei entsprechend großer Federkraft — vorgenommen werden kann. Zum Verdrehen der Eingangswelle müßte dann also noch eine zweite Person eingreifen. Beim Einbau des Meßgetriebes dagegen kann das Verriegelungsblech während der Montage durch das Gehäuse einer anzukuppelnden Antriebseinheit selbsttätig zurückgedrückt werden, so daß die Eingangswelle mit ihrer Ankupplung gleichzeitig automatisch entriegelt wird. Ein weiterer Vorteil der erfindungsgemäßen Konstruktion besteht darin, daß das Verriegelungsblech nach der Entriegelung auf der Eingangswelle über dem Abschnitt verminderten Querschnitts sitzt und somit keinerlei Reibung verursacht.

Das Verriegelungsblech selbst kann als ebenes, einfaches Schnitteil ausgebildet sein und erfordert somit wenig Aufwand. Besonders einfach ist diese Art der Verriegelung auch dadurch, daß die ohnehin für die Zahnkupplung auf der Eingangswelle notwendige Verzahnung gleichzeitig zur Verriegelung mit dem Verriegelungsblech ausgenutzt wird. Diese Verzahnung ermöglicht gleichzeitig ein Einrasten des Verriegelungsbleches in vielen Einzelpositionen.

Die Axialführung des Verriegelungsbleches wird in einer zweckmäßigen Ausführungsform durch mindestens zwei achsparallel im Gehäuse befestigte, in Bohrungen des Verriegelungsbleches passende Führungsbolzen gebildet. Damit ist eine axiale Bewegung in bestimmten Grenzen möglich, während eine radiale oder eine Drehbewegung verhindert wird. Die Federkraft, die das Verriegelungsblech in die Verzahnung der Eingangswelle vorspannt, kann durch auf den Führungsbolzen angeordnete und am Gehäuse abgestützte Schraubenfedern erzeugt werden. Am Ende der Führungsbolzen ist zweckmäßigerweise ein Anschlagring vorgesehen, gegen den das Verriegelungsblech durch die Federkraft gedrückt wird.

An dem Verriegelungsblech sind zweckmäßigerweise mindestens zwei achsensymmetrisch angeordnete Entriegelungslaschen ausgebildet, an denen die der Federkraft entgegenwirkenden Kräfte angreifen können. Durch die symmetrische Anordnung der Entriegelungslaschen wird ein Verkanten des Verriegelungsbleches in der Verzahnung verhindert. Das Entriegeln kann im Einzelfall von Hand durch beidhändiges Drücken an den Laschen erfolgen. Im allgemeinen erfolgt die Entriegelung jedoch nur beim Einbau des Meßgetriebes, wobei an einer entsprechenden Antriebseinheit vorgesehene Schultern gegen die Entriegelungslaschen drücken und die Eingangswelle entriegeln.

Das Meßgetriebe kann an eine entsprechende Antriebseinheit in der Weise angepaßt sein, daß am Gehäuse des Meßgetriebes ein Schlitz zur Aufnahme eines am Gehäuse der Antriebseinheit vorgesehenen Bolzens derart ausgebildet ist, daß der Bolzen beim Aufsetzen der Antriebseinheit auf das Meßgetriebe vor dem Eingreifen der Verzahnung der Wellen bereits in Eingriff kommt. Dadurch wird eine Grobpositionierung erreicht, die beim nachfolgenden Entriegeln der Eingangswelle durch das weitere Aufschieben der Antriebseinheit keine gegenseitige Verdrehung der beiden Gehäuse mehr zuläßt. Weiterhin kann zur Feinpositionierung am Meßgetriebegehäuse eine achsparallele Bohrung zur Aufnahme eines am Gehäuse der Antriebseinheit ausgebildeten Stiftes vorgesehen sein, wobei der Stift erst nach dem Entriegeln der Eingangswelle mit der Bohrung in Eingriff kommt. Damit wird sichergestellt, daß die Eingangswelle beim Ineinanderschieben der Zahnkupplung entriegelt ist und ein kleines Spiel besitzt, bevor die beiden Gehäuse endgültig gegenseitig fixiert werden.

Die Erfindung wird nachfolgend an einem Ausführungsbeispiel anhand der Zeichnung näher erläutert. Es zeigt

Figur 1 ein erfindungsgemäßes Meßgetriebe mit dem Gegenstück einer Antriebseinheit, schematisch dargestellt und teilweise geschnitten,

Figur 2 eine stirnseitige Ansicht des Meßgetriebes von Fig. 1.

Das erfindungsgemäße Meßgetriebe besitzt ein Getriebegehäuse 1, in dem über ein Lager 2 eine Eingangswelle 3 gelagert ist, deren freies Ende 3a eine Stirnverzahnung 3b zur Ankupplung an eine Antriebswelle 4 mit Innenverzahnung 4a besitzt. Diese Antriebswelle 4 ist über Lager 5 in einem Antriebsgehäuse 6 einer Antriebseinheit gelagert, deren weiterer Aufbau in diesem Zusammenhang nicht weiter dargestellt und nicht weiter beschrieben werden soll.

Um die Nullposition der Eingangswelle 3 im Gehäuse 1 zu fixieren, ist ein Verriegelungsblech 7 mit einer zentralen Bohrung mit Innenverzahnung 7a so auf die Welle 3 aufgesetzt, daß die Innenverzahnung 7a mit der Verzahnung 3b der Welle 3 in Eingriff ist. Das Verriegelungsblech 7 ist mit Bohrungen 7b auf zwei Führungsbolzen 8 des Gehäuses 1 in Axialrichtung verschiebbar, jedoch drehgesichert, gelagert und wird durch je eine Schraubenfeder 9 gegen einen Anschlagring 10 gepreßt, wodurch es in Eingriff mit der Stirnverzahnung 3b gehalten wird. An zwei einander gegenüberstehenden Entriegelungslaschen 11, die am Verriegelungsblech 7 ausgebildet sind und jeweils über den Anschlagring 10 hinausstehen, kann das Verriegelungsblech 7 entgegen der Kraft der Schraubenfedern 9 verschoben und außer Eingriff mit der Stirnverzahnung 3b gebracht werden. Das Verriegelungsblech 7 wird dabei aus dem Bereich 3a der Eingangswelle 3 in einen Bereich 3c mit vermindertem Querschnitt verschoben, so daß die Welle freibeweglich wird, ohne am Verriegelungsblech 7 zu reiben. Sobald jedoch keine Kraft mehr an den Entriegelungslaschen 11 eingreift, wird das Verriegelungsblech 7 durch die Federkraft wieder mit der Verzahnung 3b der Eingangswelle 3 in Eingriff gebracht und verriegelt die eingestellte Position der Welle 3.

Die Entriegelung der Eingangswelle 3 kann automatisch durch das Ankuppeln der Antriebseinheit erfolgen. Zu diesem Zweck ist das Gehäuse 6 der Antriebseinheit so ausgebildet, daß die Schultern 12 beim Ankuppeln auf die Entriegelungslaschen 11 drücken und das Verriegelungsblech 7 zurückschieben. Bei diesem Ankuppeln wird zunächst eine Grobpositionierung durch den Bolzen 13 erreicht, der in einen Schlitz 14 einer am Anschlagring 10 ausgebildeten Hülse 15 vorgesehen ist. Außerdem besitzt das Getriebegehäuse 1 eine Bohrung 16 zur Aufnahme eines Stiftes 17 zur Feinpositionierung. Dieser Stift kommt mit der Bohrung jedoch erst in Eingriff, nachdem die Eingangswelle entriegelt wurde, um ein klemmfreies Ineinanderschieben der Kupplungsverzahnung 3b, 4a zu ermöglichen. Nach dem Einstecken des Stiftes 17 ist das Getriebegehäuse 1 mit dem Antriebsgehäuse 6 unverdrehbar verbunden.

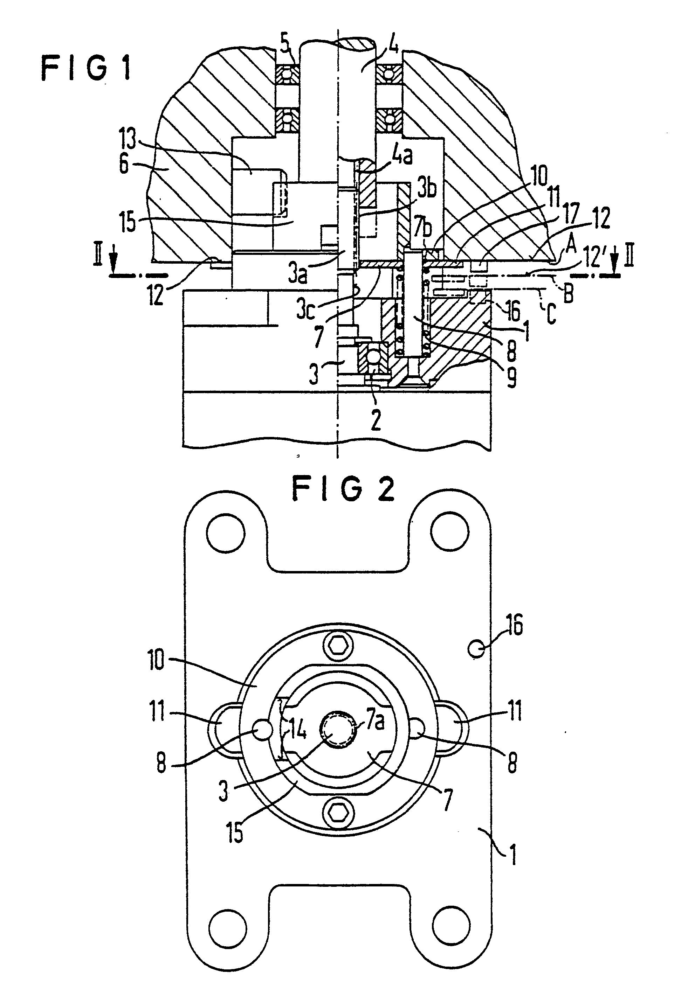

In Fig. 1 sind die einzelnen Phasen der Entriegelung der Eingangswelle 3 dargestellt. In der Position A kommt die Schulter 12 des Gehäuses 6 gerade mit dem Verriegelungsblech 7 bzw. mit den Entriegelungslaschen 11 in Berührung. Die Eingangswelle 3 ist noch verriegelt und der Bolzen 13 ist bereits mit dem Schlitz 14 in Eingriff, so daß das Gehäuse 6 gegenüber dem Gehäuse 1 grob positioniert ist. Beim weiteren Aufschieben der Antriebseinheit wird die Position B erreicht. Die jetzt gestrichelt dargestellte Schulter 12' hat das Verriegelungsblech 7 gegen die Kraft der Federn 9 verschoben und die Eingangswelle 3 entriegelt. Nunmehr kann der Stift 17 in die paßgenaue Bohrung 16 eingesteckt werden, um eine Feinpositionierung des Antriebsgehäuses 6 gegenüber dem Getriebegehäuse 1 vorzunehmen.

**Patentansprüche**

1. Meßgetriebe mit verzahnter Eingangswelle (3), welche in einem Getriebegehäuse (1) eine definierte Nullposition besitzt, dadurch gekennzeichnet, daß die Eingangswelle (3) in Anschluß an die auf ihrem Umfang ausgebildete Verzahnung (3b) einen Abschnitt verminderten Querschnitts (3c) aufweist und daß auf der Eingangswelle (3) ein senkrecht zu ihrer Achse stehendes Verriegelungsblech (7) mit an die Verzahnung (3b) der Welle (3) angepaßter Innenverzahnung (7a) angeordnet ist, wobei das Verriegelungsblech (7) in einer Axialführung (8) drehgesichert gelagert, mittels Federkraft (9) in den Verzahnungsbereich (3a) der Eingangswelle (3) vorgespannt und entgegen der Federkraft (9) in Axialrichtung in den Bereich verminderten Querschnitts (3c) der Eingangswelle (3) verschiebbar ist.

2. Meßgetriebe nach Anspruch 1, dadurch gekennzeichnet, daß die Axialführung des Verriegelungsbleches (7) durch mindestens zwei achsparallel im Gehäuse (1) befestigte, in Bohrungen (7b) des Verriegelungsbleches passende Führungsbolzen (8) gebildet wird.

3. Meßgetriebe nach Anspruch 2, dadurch gekennzeichnet, daß auf den Führungsbolzen (8) jeweils am Gehäuse (1) abgestützte und gegen das Verriegelungsblech (7) vorgespannte Schraubenfedern (9) angeordnet sind.

4. Meßgetriebe nach einem der Ansprüche 1 bis 3, dadurch gekennzeichnet, daß am Verriegelungsblech (7) mindestens zwei axialsymmetrisch zur Eingangswelle (3) angeordnete Entriegelungslaschen (11) ausgebildet sind.

5. Meßgetriebe nach einem der Ansprüche 1 bis 4, dadurch gekennzeichnet, daß die Axialbewegung des Verriegelungsbleches (7) durch einen am Gehäuse befestigten Anschlagring (10) begrenzt ist.

6. Meßgetriebe nach einem der Ansprüche 1 bis 5 mit einer eine Antriebswelle (4) in einem Antriebsgehäuse (6) aufweisenden Antriebseinheit, dadurch gekennzeichnet, daß am Getriebegehäuse (1) ein Schlitz (14) zur Aufnahme eines am Antriebsgehäuse (6) vorgesehenen Bolzens (13) derart ausgebildet ist, daß der Bolzen (13) beim Aufsetzen des Antriebsgehäuses (6) auf das Getriebegehäuse (1) vor dem Eingreifen der Verzahnung (3b, 4a) der Wellen (3, 4) und vor dem Entriegeln der Eingangswelle (3) in Eingriff kommt.

7. Meßgetriebe nach Anspruch 6, dadurch gekennzeichnet, daß am Getriebegehäuse (1) eine achsparallele Bohrung (16) zur Aufnahme eines am Antriebsgehäuse (6) ausgebildeten Stiftes (17) zur Feinpositionierung vorgesehen ist, derart, daß der Stift (17) mit der paßgenauen Bohrung (16) nach Entriegelung der Eingangswelle (3) in Eingriff kommt.

## Claims

1. Measuring gear having a toothed primary shaft (3) which has a defined zero position in a gear housing (1), characterised in that adjoining the toothed construction formed on its periphery, the primary shaft (3) has a portion of reduced cross-section (3c) ; and that, on the primary shaft (3), there is arranged a locking sheet (7) which is at right angles to the axis of the shaft and has an internally toothed construction (7a) adapted to the toothed construction (3b) of the shaft (3), wherein the locking sheet (7) is positioned in an axial guide (8) so as to be resistant to rotation and is preloaded into the toothed region (3a) of the primary shaft (3) by means of a spring force (9), and is movable in the axial direction against the spring force (9) into the portion (3c) of the primary shaft (3) of reduced cross-section.

2. Measuring gear as claimed in Claim 1, characterised in that the axiale guide of the locking sheet (7) is formed by at least two guide bolts (8) which are secured in the housing (1) so as to be parallel to the axis and fit into bores (7b) in the locking sheet.

3. Measuring gear as claimed in Claim 2, characterised in that on the guide bolts (8) screw springs (9) are arranged which are supported on the housing (1) in each case and are preloaded against the locking sheet (7).

4. Measuring gear as claimed in one of Claims 1 to 3, characterised in that at least two unlocking lugs (11), which are arranged so as to be axially symmetrical with respect to the primary shaft (3), are provided on the locking sheet (7).

5. Measuring gear as claimed in one of Claims 1 to 4, characterised in that the axial movement of the locking sheet (7) is limited by a stop ring (10) which is secured to the housing.

6. Measuring gear as claimed in one of Claims 1 to 5 having a drive unit which has a drive shaft (4) in a drive housing (6), characterised in that a slot (14) to accommodate a bolt (13) which is provided on the drive housing is provided on the gear housing (1) in such manner that when the drive housing (6) is placed on the gear housing (1), the bolt (13) engages prior to the engagement of the toothed construction (3b, 4a) of the shafts (3, 4) and prior to the unlocking of the primary shaft (3).

7. Measuring gear as claimed in Claim 6, characterised in that the gear housing (1) is provided with a bore (16) parallel to the axis to accommodate a pin (17) which is formed on the drive housing (6) and serves for accurate positioning, in such manner that the pin (17) engages with the accurately fitting bore (16) after the unlocking of the primary shaft (3).

## Revendications

1. Mécanisme de mesure comportant un arbre d'entrée denté (3), qui possède une position de zéro définie dans un carter (1) du mécanisme, caractérisé par le fait que l'arbre d'entrée (3) comporte, à la suite de la denture (3b) réalisée sur son pourtour, une partie de section transversale réduite (3c) et que sur l'arbre d'entrée (3) se trouve disposée une tôle de verrouillage (7) perpendiculaire à l'axe de l'arbre et comportant une denture intérieure (7a) adaptée à la denture (3b) de l'arbre (3), la tôle de verrouillage (7) étant soutenue avec blocage en rotation dans un guide axial (8) et étant précontrainte au moyen de la force d'un ressort (9) dans la zone (3a), portant la denture, de l'arbre d'entrée (3) et étant déplaçable suivant la direction axiale, à l'encontre de la force du ressort (9), dans la zone de section transversale réduite (3c) de l'arbre d'entrée (3).

2. Mécanisme de mesure suivant la revendication 1, caractérisé par le fait que le guide axial de la tôle de verrouillage (7) est formé par au moins deux broches de guidage (8) fixées dans le carter (1) de telle sorte que leurs axes sont parallèles, et s'adaptant dans les perçages (7b) de la tôle de verrouillage.

3. Mécanisme de mesure suivant la revendication 2, caractérisé par le fait que des ressorts hélicoïdaux (9), qui prennent appui respectivement sur le carter (1) et sont placés sous précontrainte contre la tôle de verrouillage (7), sont disposés sur les broches de guidage (8).

4. Mécanisme de mesure suivant l'une des revendications 1 à 3, caractérisé par le fait qu'au moins deux pattes de déverrouillage (11), qui sont situées dans des positions axiales symétriques par rapport à l'arbre denté (3), sont prévues sur la tôle de verrouillage (7).

5. Mécanisme de mesure suivant l'une des revendications 1 à 4, caractérisé par le fait que le déplacement axial de la tôle de verrouillage (7) est limité par un anneau de butée (10) fixé sur le carter.

6. Mécanisme de mesure suivant l'une des revendications 1 à 5, comportant une unité d'entraînement possédant un arbre moteur (4) situé dans un carter (6) de l'unité d'entraînement, caractérisé par le fait qu'une fente (14) servant à recevoir un téton (13) prévu sur le carter (6) de l'unité d'entraînement est ménagée dans le carter (6) du mécanisme de telle sorte que lorsque le carter (6) de l'unité d'entraînement est monté sur le carter (1) du mécanisme, le téton (13) vient en prise avant l'engrènement des dentures (3b, 4a) des arbres (3, 4) et avant le déverrouillage de l'arbre d'entrée (3).

7. Mécanisme de mesure suivant la revendication 6, caractérisé par le fait qu'il est prévu, dans le carter (1) du mécanisme, un perçage (16) parallèle à l'axe et servant à loger une broche (17) réalisée sur le carter (6) de l'unité d'entraînement et servant à réaliser un positionnement précis, de telle sorte que la broche (17) vient en prise avec le perçage (16), adapté de façon précise, après le déverrouillage de l'arbre d'entrée (3).

# FIG 1

# FIG 2